# EUROPÄISCHE PATENTSCHRIFT

(11) **EP 2 335 904 B1**
(45) Veröffentlichungstag und Bekanntmachung des Hinweises auf die Patenterteilung: **03.04.2013**
(21) Anmeldenummer: 10015298.2
(22) Anmeldetag: 04.12.2010
(51) Int. Cl.: B29C 49/78, F16K 3/24, F16K 31/12

(54) **Ventil**
Valve
Soupape

(30) Priorität: 21.12.2009 DE 102009059830
(43) Veröffentlichungstag der Anmeldung: 22.06.2011
(73) Patentinhaber: FESTO AG & Co. KG, 73734 Esslingen (DE)
(72) Erfinder: Skobjin, Wolfgang, 73230 Kirchheim (DE); Bürk, Erwin, Dr., 70190 Stuttgart (DE); Krapf, Michael, 73779 Deizisau (DE); Schill, Sebastian, 72581 Dettingen/Erms (DE)
(74) Vertreter: Vogler, Bernd

(56) Entgegenhaltungen:
- EP-A1- 0 590 339
- EP-A2- 0 838 596
- WO-A1-2009/010096
- DE-A1-102006 061 301
- DE-U1- 20 305 232
- DATABASE WPI Week 199743 Thomson Scientific, London, GB; AN 1997-467005 XP002636450, -& JP 9 217847 A (AKASHI KIKAI SEISAKUSHO KK) 19. August 1997 (1997-08-19)

## Beschreibung

Die Erfindung betrifft ein Ventil für eine mit Hochdruck arbeitende Blasmaschine zur Erzeugung von geblasenen Hohlkörpern, mit einem Ventilgehäuse, das eine umfangsseitig von einer Gehäusewand begrenzte Gehäuseausnehmung aufweist, in der wenigstens ein Ventilglied mittels Druckluftbeaufschlagung verschieblich gelagert ist, wobei das Ventilgehäuse wenigstens einen in die Gehäuseausnehmung mündenden Speisekanal zur Zuführung von unter Arbeitsdruck stehender Speiseluft und wenigstens einen von der Gehäuseausnehmung abgehenden Arbeitskanal besitzt, an dem in Abhängigkeit von wenigstens zwei unterschiedlichen Funktionsstellungen des Ventilglieds unter Arbeitsdruck stehende Arbeitsluft für den Blasvorgang bereitstellbar ist, und wobei dem Ventilglied Stellmittel zugeordnet sind, die mit einer Stellkraft auf eine Stellseite des Ventilglieds einwirken und dieses in eine Grundstellung der Funktionsstellungen bewegen, aus der es durch Druckluftbeaufschlagung einer Steuerseite des Ventilglieds herausbewegbar ist, wobei das Ventilglied als länglicher Ventilschieber ausgebildet ist, der einen eine Steuerfläche besitzenden Steuerabschnitt aufweist, der gemeinsam mit dem Ventilgehäuse eine Steuerkammer bildet, in die Steuerluft einleitbar ist, um den Ventilschieber unabhängig von der unter Arbeitsdruck stehenden Speiseluft aus der Grundstellung herauszubewegen, und wobei eine gemeinsam von Ventilschieber und Ventilgehäuse gebildete, der Steuerkammer entgegengesetzt angeordnete, eine Stellfläche besitzende Stellkammer vorgesehen ist, in der die Stellmittel aufgenommen sind, wobei die Stellkammer ringförmig ausgebildet und in Richtung nach radial außen von der Gehäusewand und Richtung nach radial innen von einem insbesondere zylindrischen Fortsatz begrenzt ist.

Ein Ventil für eine mit Hochdruck arbeitende Blasmaschine ist beispielsweise aus der EP 1 271 029 B1 oder EP 1 281 901 B1 bekannt. Dort ist eine Vorrichtung zur pneumatischen Steuerung eines Blasdrucks bei der Herstellung von blasgeformten Behältern aus einem thermoplastischen Material beschrieben. Für die pneumatische Steuerung wird ein Hochdruckventil eingesetzt, dessen Ventilgehäuse einen Zylinderinnenraum besitzt, in dem ein Steuerkolben beweglich geführt ist. Der Steuerkolben besteht aus einem Kolbenschaft und einem Kolbenkopf mit größerem Durchmesser. In der Grundstellung verschließt der Kolbenschaft bzw. eine auf den Kolbenschaft aufgesetzte Schaftkappe einen Hauptströmungsweg fluiddicht. Damit der Kolbenschaft bzw. die Schaftkappe in der Grundstellung auf dem ventilsitz fluiddicht gepresst bleibt, wird ein auf Seiten des Kolbenkopfes ausgebildete Steuerfläche mit einem in einen Steuerraum eingeleiteten Steuerdruck beaufschlagt. Bei einer Absenkung des Steuerdrucks, beispielsweise Entlüften des Steuerraums, wird der Steuerkolben durch den einwirkenden Hochdruck vom Sitz abgehoben und der Hochdruck kann aus dem Hauptströmungsweg durch den Zylinderinnenraum in einen Arbeitskanal übertreten. Das Öffnen des Hochdruckventils wird also durch die Bewegung des Steuerkolbens durch den anstehenden Hochdruck bewirkt, falls auf Seiten des Steuerraums Druck abgesenkt wird. Folglich ist entweder die Steuerfläche auf Seiten des Steuerraums oder der Steuerdruck relativ hoch zu wählen, damit der Steuerkolben in der Grundstellung verbleibt. Um unterschiedliche Behälter blasen zu können, ist es notwendig, den Arbeitsdruck zu variieren. Um nach wie vor einen fluiddichten Sitz des Steuerkolbens auf seinem zugeordneten Ventilsitz zu gewährleisten ist es daher notwendig, den Steuerdruck zu variieren, d.h. bei höherem Arbeitsdruck muss auch der entgegenwirkende Steuerdruck erhöht werden.

Die EP 0 838 596 A 2 offenbart ein 3/2-Wegeventil, mit einem länglichen Ventilschieber und einem mit dem Ventilschieber verbundenen Ventilkolben zum Antrieb des Ventilschiebers. Der Ventilkolben ist in einer Steuerkammer verschieblich angeordnet und besitzt eine Steuerfläche, die mittels Fluiddruck beaufschlagbar ist. Es ist ebenfalls eine der Steuerkammer entgegengesetzt angeordnete Stellkammer angeordnet. In der Stellkammer ist eine Rückstellfeder angeordnet, die für die Rückstellung des ventilschiebers in die Ausgangsstellung bei Entlüftung der Steuerkammer sorgt.

Die JP 9217847 offenbart ein Elektromagnetventil mit einem Steuerkolben, in dem eine Einström- und eine Ausströmöffnung ausgebildet sind, die zu einem in dem Steuerkolben angeordneten Sub-Öffnung führt, in dem ein Sub-Steuerkolben verschieblich angeordnet ist. Es ist hier also eine Kolben-in-Kolben-Anordnung offenbart.

Die DE 203 05 232 offenbart einen Ventilblock zur Druckluftsteuerung bei der Blasherstellung von Kunststoffflaschen. In dem Ventilblock befinden sich mehrere Wegeventile, die jeweils mittels elektrisch betätigbaren Vorsteuerventilen angesteuert werden. Die Wegeventile besitzen jeweils ein Ventilglied, das eine für die Erzeugung einer Stellkraft in Schließrichtung verantwortliche erste Wirkfläche und eine für die Erzeugung einer Stellkraft in die Öffnungsrichtung verantwortliche zweite Wirkfläche besitzen, wobei die Summe der ersten Wirkflächen größer ist als die Summe der zweiten Wirkflächen.

Aufgabe der Erfindung ist es, ein Ventil der eingangs erwähnten Art zu schaffen, das kompakt aufgebaut ist und sich universell auch bei sich ändernden Arbeitsdrücken ohne wesentlichen Einfluss auf die Schaltzeit einsetzen lässt.

Diese Aufgabe wird durch ein Ventil mit den Merkmalen des unabhängigen Anspruches 1 gelöst. Weiterbildungen der Erfindung sind in den Unteransprüchen dargestellt.

Das erfindungsgemäße Ventil zeichnet sich dadurch aus, dass als Stellmittel eine Luftfeder vorgesehen ist, und dass der Ventilschieber wenigstens ein elastisches Dichtelement trägt, das in Abhängigkeit von der Bewegung des Ventilschiebers in oder außer Eingriff einer am Ventilgehäuse angeordneten Dichtungshülse bringbar ist, wobei weitere Dichtelemente zur Abdichtung der Steuerkammer und der Stellkammer vorgesehen sind, wobei eine Wirkfläche des elastischen Dichtelements und Wirkflächen der weiteren Dichtelemente im Wesentlichen gleich groß sind.

Der eingesetzte Ventilschieber kann relativ klein dimensioniert werden, da die Dimensionierung des Ventilschiebers unabhängig vom anstehenden Arbeitsdruck ist. Dadurch sind Ventile mit relativ kleinen Baugrößen realisierbar. Ferner kann auch der Arbeitsdruck variabel eingestellt werden ohne dass bei konstantem Steuerdruck die Schaltzeiten variieren. Dadurch lässt sich das Ventil ganz flexibel in eine Blasstation integrieren, in der unterschiedliche Hohlkörper zu blasen sind.

Ein wichtiger Aspekt ist die Unabhängigkeit der Schaltzeit eines derartigen Ventils vom Arbeitsdruck, wodurch auch sehr kurze Schaltzeiten realisiert werden können. Dies führt zu einer relativ hohen Wiederholgenauigkeit.

Nach einem Stillstand kann das Ventil allein mit dem Steuerdruck geschaltet werden, ohne dass die Bereitstellung des Arbeits- bzw. Betriebsdrucks abgewartet werden muss. Dadurch ist es möglich, dass Schaltverzögerungen des Ventils nach Stillstand eliminiert werden, indem das Ventil ohne Arbeitsdruck geschaltet wird.

Als Stellmittel ist eine Luftfeder vorgesehen. Der Ventilschieber kann also über die Stellkraft der Luftfeder in seine Grundstellung bewegt und dort gehalten werden.

Besonders bevorzugt ist die Steuerfläche des Steuerabschnitts größer als die Stellfläche des Stellabschnitts. Aufgrund der großen Steuerfläche reicht ein relativ geringer Steuerdruck aus, um den Ventilschieber entgegen der Stellkraft der Stellmittel aus der Grundstellung herauszubewegen. Zweckmäßigerweise werden Luftfeder und Steuerkammer über dieselbe, zentralen Steuerluftversorgung versorgt, wobei bei Beaufschlagung der Steuerkammer mit Steuerdruck in Folge der großen Steuerfläche eine Bewegung des Ventilschiebers aus der Grundstellung heraus erfolgt.

Der Fortsatz kann an einem zum Ventilgehäuse gehörenden Gehäusedeckel angeordnet sein, der die Gehäuseausnehmung an einer Endseite fluiddicht verschließt, wobei der Stellabschnitt eine insbesondere zylindrische Ausnehmung aufweist, die den Fortsatz übergreift. Prinzipiell wäre es jedoch auch möglich, dass der Fortsatz am Endbereich des ventilschiebers angeordnet ist und der Gehäusedeckel korrespondierend hierzu eine Deckelausnehmung besitzt.

Bei einer weiterbildung der Erfindung sind Steuerabschnitt und Stellabschnitt als separate Bauteile ausgestaltet, die über Verbindungsmittel, beispielsweise über eine Schraubverbindung, miteinander gekoppelt sind. Alternativ wäre es jedoch auch möglich, den Ventilschieber einteilig auszubilden, wobei dann Steuerabschnitt und Stellabschnitt an sich entgegengesetzten Endbereichen des Ventilschiebers angeordnet sind.

Bei einer Weiterbildung der Erfindung ist das Ventilgehäuse mehrteilig aufgebaut, mit einem die Steuerkammer aufweisenden ersten Gehäuseteil und einem die Stellkammer aufweisenden zweiten Gehäuseteil.

In besonders bevorzugter Weise ist im ersten Gehäuseteil ein zur Gehäuseausnehmung gehörender Ringraum ausgebildet, in den der wenigstens eine Speisekanal, in axialer Richtung zu einer Gehäuse-Längsachse ausgerichtet, einmündet.

Alternativ kann auch eine Lufteinspeisung in radialer Richtung erfolgen, wobei insbesondere wenigstens ein in radialer Richtung ausgerichteter Speisekanal in den Ringraum einmündet.

Bei einer Weiterbildung der Erfindung sind Endlagendämpfmittel zur Endlagendämpfung des Ventilschiebers beim Einfahren in die Funktionsstellungen vorgesehen. Eine dieser Endlagen kann beispielsweise die Grundstellung sein. Als Endlagendämpfmittel kommen beispielsweise gummielastische Puffer in Frage, die am Endbereich des Ventilschiebers angeordnet sind und das Ende des Ventilschiebers axial überragen.

Es sind mehrere Dichtelemente vorgesehen, die in Axialrichtung hintereinander angeordnet sind. Die Wirkflächen der Dichtelemente sind im Wesentlichen gleich groß, so dass der Ventilschieber insgesamt druckausgeglichen ist. Auch diese Maßnahme trägt zur Verkürzung der Schaltzeiten und zu einer relativ hohen Wiederholgenauigkeit bei.

Besonders bevorzugt weist die Dichtungshülse an ihrem Innenumfang eine Kontur auf, die in Axialrichtung verlaufend derart ausgebildet ist, dass das Dichtelement bei dessen in Eingriff Bewegung verpresst wird. Dadurch entsteht also eine zuverlässige, absolut fluiddichte Abdichtung in diesem Bereich.

Zweckmäßigerweise ist die Dichtungshülse in axialer Richtung zur Gehäuse-Längsachse eingesetzt in einer im ersten Gehäuseteil ausgebildeten Hülsenaufnahme aufgenommen.

Die Dichtungshülse kann mit Presssitz in der Hülsenaufnahme sitzen. Zweckmäßigerweise besteht die Dichtungshülse aus Metall.

Ein bevorzugtes Ausführungsbeispiel der Erfindung ist in der Zeichnung dargestellt und wird im Folgenden näher erläutert. In der Zeichnung zeigen:
- Figur 1: einen Längsschnitt durch ein erstes Ausführungsbeispiel des erfindungsgemäßen Ventils, wobei der Ventilschieber in zwei unterschiedlichen Funktionsstellungen gezeigt ist und
- Figur 2: einen Teillängsschnitt durch ein zweites Ausführungsbeispiel des Ventils.

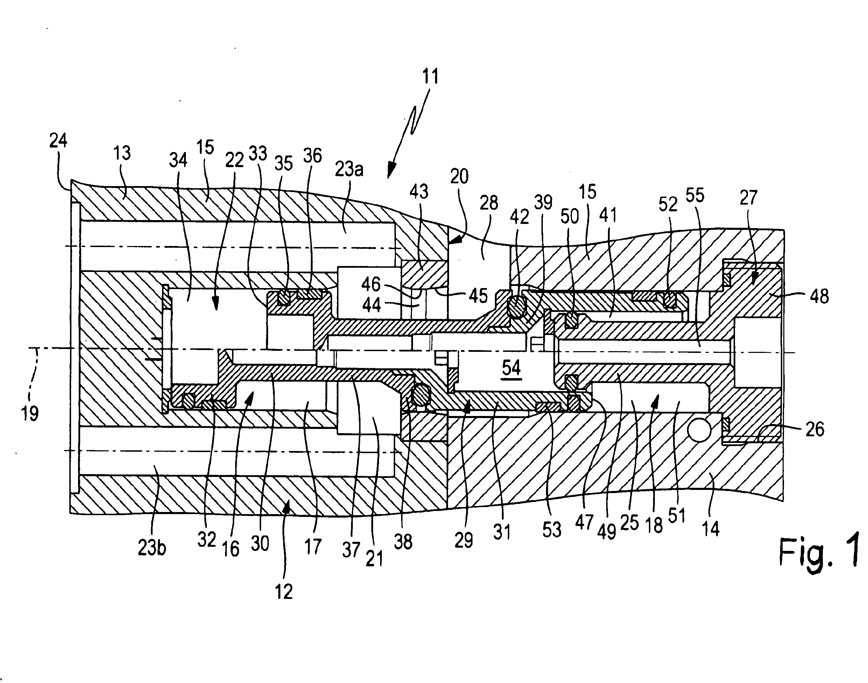

In der Figur 1 ist ein erstes Ausführungsbeispiel des erfindungsgemäßen Ventils 11 dargestellt, das vorzugsweise zur pneumatischen Steuerung eines Arbeitsdrucks bzw. Blasdrucks bei der Herstellung von blasgeformten, zweckmäßigerweise aus thermoplastischem Material bestehenden Behältern in einer Blasmaschine dient. Die Blasmaschine besitzt wenigstens eine Blasstation, in die wenigstens eines der Ventile integriert ist. Zweckmäßigerweise wird hierzu ein Ventilblock mit mehreren Ventilen verwendet.

Das Ventil besitzt ein Ventilgehäuse 12 mit einem ersten Gehäuseteil 13 und einem mit dem ersten Gehäuseteil 13 verbundenen zweiten Gehäuseteil 14. In dem Ventilgehäuse 12 befindet sich umfangsseitig von einer Gehäusewand 15 begrenzt eine Gehäuseausnehmung 16. Die Gehäuseausnehmung 16 wird insgesamt von einem im ersten Gehäuseteil 13 angeordneten ersten Gehäuseausnehmungsabschnitt 17 und einem im zweiten Gehäuseteil 14 angeordneten zweiten Gehäuseausnehmungsabschnitt 18 gebildet. Das Ventilgehäuse 12 besitzt ferner eine Gehäuse-Längsachse 19.

Der erste Gehäuseausnehmungsabschnitt 17 im ersten Gehäuseteil 13 ist zu einer dem zweiten Gehäuseteil 14 zugewandten Fügefläche 20 hin offen ausgestaltet. Sie ist in drei Zylinderabschnitten gegliedert, die von der Fügefläche 20 aus nach innen jeweils mit ihrem Durchmesser abnehmen. Zur Fügefläche 20 hin benachbart ist zunächst ein erster Zylinderabschnitt ausgebildet, an den sich axial zur Gehäuse-Längsachse 19 ein durchmesserkleinerer Ringraum 21 anschließt, an den sich schließlich ein noch durchmesserkleinerer Endabschnitt 22 anschließt. Bei der Herstellung des ersten Gehäuseausnehmungsabschnitts 17 wird zweckmäßigerweise zunächst in Axialrichtung der durchmesserkleinste Endabschnitt 22 dann anschließend der Ringraum 21 und dann der Zylinderabschnitt gefertigt, beispielsweise gebohrt. In den Ringraum 21 münden gemäß erstem Ausführungsbeispiel zwei sich im Wesentlichen parallel zur Gehäuse-Längsachse 19 erstreckende Speisekanäle 23a, 23b ein. Diese Speisekanäle 23a, 23b erstrecken sich bis an die Stirnseite 24 des ersten Gehäuseteils 13. Alternativ kann auch ein einzelner Speisekanal vorgesehen sein. Ferner kann der wenigstens eine Speisekanal an beliebiger Stelle in den Ringraum 21 einmünden.

Auch der zweite Gehäuseausnehmungsabschnitt 18 besteht aus Zylinderabschnitten mit unterschiedlich großem Durchmesser. Von der Fügefläche 20 ausgehend erstreckt sich zunächst ein Zylinderabschnitt in axialer Richtung, der sich in einen relativ langen Mittelabschnitt 25 verjüngt, wobei die Durchmesserverkleinerung relativ gering ausfällt. Dieser Mittelabschnitt 25 erstreckt sich in axialer Richtung. An diesem Mittelabschnitt 25 schließt sich ein durchmessergroßer Endabschnitt 26 an, der zur Lagerung eines Gehäusedeckels 27 dient. Im zweiten Gehäuseteil 14 befindet sich ein Speisekanal 28, der quer zur Gehäuse-Längsachse 19 ausgerichtet ist und in den an die Fügefläche 20 angrenzenden Zylinderabschnitt des zweiten Gehäuseausnehmungsabschnitts 18 einmündet.

In der Gehäuseausnehmung 16 ist ein Ventilglied in Form eines länglichen Ventilschiebers 29 mittels Druckluftbeaufschlagung verschiebbar gelagert. Der Ventilschieber 29 ist gemäß bevorzugtem Ausführungsbeispiel mehrteilig aufgebaut und besitzt einen dem ersten Gehäuseteil 13 zugeordneten Steuerabschnitt 30 und einen über Verbindungsmittel mit dem Steuerabschnitt 30 verbundenen, dem zweiten Gehäuseteil 14 zugeordneten Stellabschnitt 31.

Der Steuerabschnitt 30 ist zylindrisch ausgebildet und besitzt eine durchmessergroße Kolbenpartie 32, die verschieblich im Endabschnitt 22 des ersten Gehäuseteils 13 geführt ist. Die Stirnseite der Kolbenpartie 32 bildet eine Steuerfläche 33, die mit Steuerluft beaufschlagt werden kann. Die Steuerfläche 33 der Kolbenpartie 32 und die den Endabschnitt 22 umgebende Gehäusewandung bilden gemeinsam eine Steuerkammer 34, über die mittels einer nicht dargestellten Steuerluftleitung Steuerluft einleitbar ist, um den Ventilschieber 29 linear zu bewegen. Zur fluiddichten Abdichtung der Steuerkammer 34 dient ein in Axialrichtung angeordnetes Dichtelement 35. Des weiteren ist in axialer Richtung auf der Kolbenpartie 32 neben dem Dichtelement 35 ein Führungselement 36 zur Führung des Ventilschiebers 29 angeordnet. An die Kolbenpartie 32 schließt sich in Axialrichtung eine durchmesserkleinere Mittelpartie 37 an, die endseitig, also der Kolbenpartie 32 entgegengesetzt, in eine durchmesssergrößere Flanschpartie 38 übergeht. An diese Flanschpartie 38 ist eine korrespondierende Flanschpartie 39 am Stellabschnitt 31 angesetzt. Zwischen der Steuerfläche 33 der Kolbenpartie 32 und der gegenüberliegenden Fläche 57 befindet sich ein Endlagendämpfmittel in Form eines flexiblen gummielastischen Puffers 56.

Steuerabschnitt 30 und Stellabschnitt 31 werden über Verbindungsmittel in Form einer Schraube miteinander verbunden, wobei gemäß bevorzugtem Ausführungsbeispiel die Schraube konzentrisch zur Gehäuse-Längsachse 19 angeordnet ist und über eine zylindrische Ausnehmung 41 im Stellabschnitt 31 montiert werden kann. Die zylindrische Ausnehmung 41 ist ebenfalls konzentrisch zur Gehäuse-Längsachse 19 ausgerichtet. In der Flanschpartie 39 des Stellabschnitts 31 befindet sich eine ringförmige Ausnehmung, in die ein weiteres Dichtelement 42 eingesetzt ist. Das Dichtelement 42 ragt radial über den Außenumfang des Stellabschnitts 31 hinaus. In der Dichtstellung korrespondiert das weitere Dichtelement 42 mit einer Dichtungshülse 43, die in den an die Fügefläche 20 angrenzenden Zylinderabschnitt des ersten Gehäuseausnehmungsabschnitt 17, der nachfolgend als Hülsenaufnahme 44 bezeichnet wird, eingesetzt. Gemäß bevorzugtem Ausführungsbeispiel besteht die Dichtungshülse 43 aus Metall und ist in die Hülsenaufnahme 44 eingepresst, sitzt also mit Presssitz in der Hülsenaufnahme 44. Die Dichtungshülse 43 weist an ihrem Innenumfang ein in axialer Richtung verlaufende Kontur 45 auf, die derart ausgebildet ist, dass das Dichtelemente 42 bei dessen in Eingriff Bewegung verpresst wird, wodurch eine zuverlässige fluiddichte Abdichtung in dieser Stellung geschaffen wird. Hierzu ist die Kontur im Längsschnitt durch die Dichtungshülse 43 konvex ausgestaltet, wobei sich die Kontur bis zu einem Scheitelpunkt 46 hin verjüngt, an dem die größte Presswirkung auf das Dichtelement 42 und somit eine optimale fluiddichte Abdichtung auftritt.

Die Stirnseite des Stellabschnitts 31 dient als Stellfläche 47, auf die Stellmittel in Form einer Luftfeder wirken, wodurch der Ventilschieber 29 in die in der Figur in der unteren Darstellung gezeigten Grundstellung bewegbar ist und dort gehalten werden kann. Wie bereits erwähnt befindet sich am zweiten Gehäuseteil 14 ein Gehäusedeckel 27, der einen durchmessergroßen Lagerabschnitt 48 besitzt, der in axialer Richtung in einen Fortsatz 49 übergeht. Dieser Fortsatz 49 ragt in die zylindrische Ausnehmung 41 am Stellabschnitt hinein, d.h. der Ventilschieber 29 fährt mit seiner zylindrischen Ausnehmung 41 über den Fortsatz 49. An dem dem Lagerabschnitt 28 abgewandten Ende des Fortsatzes 49 befindet sich ein weiteres Dichtelement 50. Der Außenumfang des Fortsatzes 49, die Stellfläche 47 und die dem Fortsatz 49 zugewandte Seitenfläche des Lagerabschnitts 48 bilden gemeinsame eine Stellkammer 51, die mit Druckluft beaufschlagt ist, wodurch eine Luftfeder geschaffen wird, die den Ventilschieber 29 in die Grundstellung drückt. Zur Abdichtung der Stellkammer 51 ist ein weiteres Dichtelement 52 am Außenumfang des Stellabschnitts vorgesehen.

Des Weiteren ist auch auf dieser Seite des Stellabschnitts ein Führungselement 53 zur Führung des Ventilschiebers angeordnet. Ferner dient das Dichtelement 50 zur Abdichtung der Stellkammer gegenüber einer inneren Kammer 54, die in der Figur 1 in der unteren Darstellung gezeigt ist. Diese innere Kammer 54 wird gebildet von der Stirnseite des Fortsatzes und der zylindrischen Ausnehmung 41 im zweiten Gehäuseteil 14. Die innere Kammer 54 korrespondiert mit einer Atmungsbohrung 55, die ihrerseits zur Atmosphäre ausmündet, damit eine Verdrängung der in der inneren Kammer 54 befindlichen Luft und somit eine Relativbewegung zwischen dem Stellabschnitt 31 und dem Fortsatz 49 möglich ist.

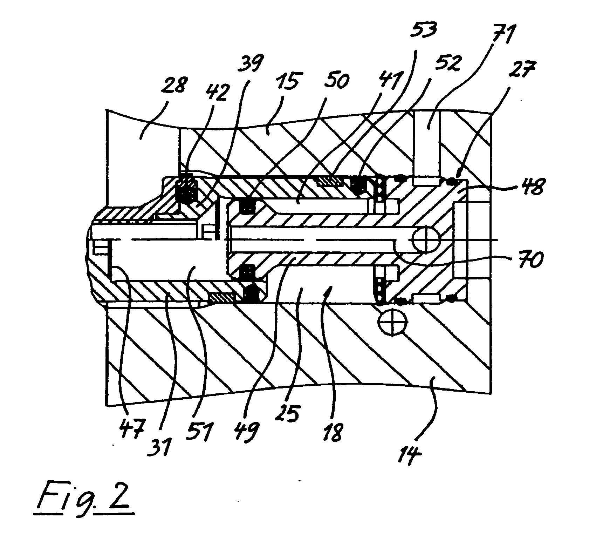

Figur 2 zeigt ein weiteres Ausführungsbeispiel des erfindungsgemäßen Ventils 11. Im Unterschied zum ersten Ausführungsbeispiel ist hier die Stellkammer 51 im Innern des Ventilschiebers 29 ausgebildet und zwar ist die Stellkammer 51 hier die innere Kammer,des ersten Ausführungsbeispiels. Die Stellkammer 51 korrespondiert mit einem Fluidkanal 70, der im zylindrischen Fortsatz 49 ausgebildet ist. Dieser Fluidkanal 70 ist mit einem beispielsweise in radialer Richtung verlaufenden Stellkammer-Speisekanal 71 verbunden, so dass Stelldruck über diese beiden Kanäle 70, 71 in die Stellkammer 51 einleitbar ist. Der ringförmige Raum zwischen der Gehäusewand und der Außenwand des Fortsatzes ist über eine nicht dargestellte Atmungsbohrung mit der Atmosphäre verbunden, wodurch Luft beim Ausfahren des Ventilschiebers 29 aus der Grundstellung verdrängt wird. Wird die Stellkammer 51 im Innern des Ventilschiebers 29 mit Stelldruck beaufschlagt, so steht dieser Druck an der zylindrischen Stellfläche 47 an, so dass der Ventilschieber 29 in die Grundstellung gedrückt wird.

Wie beispielhaft in der Figur 1 dargestellt, befindet sich der Ventilschieber in der Grundstellung (untere Hälfte), die als NC (normaly closed)-Stellung bezeichnet werden kann. Die Funktionsweise des Ventils 11 ist beispielhaft anhand eines 2/2-Wege-Ventils erläutert, es können jedoch auch 2/2 NO (normally open) oder 3/2 NO bzw. NC oder noch andere Ventiltypen realisiert sein. Der Ventilschieber 29 wird über die Luftfeder, also mittels des Stelldrucks in der Stellkammer 51 in die Grundstellung gedrückt und dort gehalten. Die Endlagendämpfung in Form des gummielastischen Puffers sorgt dafür, dass bei der Bewegung in die Grundstellung kein harter Anschlag der Stirnseite bzw. der Steuerfläche an der Gehäusewand erfolgt. In dieser Grundstellung befindet sich das Dichtelement 42 am Scheitelpunkt der Dichthülse 43, wodurch eine fluiddichte Abdichtung des Arbeitskanals 28 von den Speisekanälen 23a, 23b vorliegt. Die anstehende Speiseluft und der Arbeitsdruck können also nicht zum Arbeitskanal 28 gelangen und dort abgegriffen werden. Die Speisekanäle 23a, 23b können ebenso als Arbeitskanäle verwendet werden. Der Arbeitskanal 28 wird dann zum Speisekanal. Das Ventil 11 lässt sich also reversibel betreiben. Um einen Schaltvorgang des Ventils einzuleiten, wird die Steuerkammer 34 mit Steuerdruck beaufschlagt. Zweckmäßigerweise stammt der Steuerdruck aus einer gemeinsamen Steuerluftversorgung, aus der auch der gleich große Stelldruck für die Luftfeder stammt. Der Steuerdruck bzw. die Steuerluft wird also in die Steuerkammer 51 eingeleitet, wodurch der Ventilschieber 29 aufgrund der relativ großen Steuerfläche 33 und des im Wesentlichen druckausgeglichenen Ventilschiebers 29 aus der Grundstellung heraus bewegt wird. Dabei fährt der Stellabschnitt 31 des Ventilschiebers 29 auf den Fortsatz 49 des Gehäusedeckels 27 auf und die in der inneren Kammer 57 befindliche Luft wird über die Atmungsbohrung 55 in die Atmosphäre verdrängt. Beim zweiten Ausführungsbeispiel wird die Luft im ringförmigen Raum zwischen Gehäuse und Fortsatz über eine Atmungsbohrung verdrängt. Gleichzeitig kommt das Dichtelement 42 außer Kontakt mit der Dichtungshülse 43, wodurch Speisekanal 23a, 23b und Arbeitskanal 28 fluidisch miteinander verbunden sind. In dieser Stellung kann die unter Arbeitsdruck stehende Speiseluft als Arbeitsluft in den Arbeitskanal 28 gelangen und von dort als Blasdruck abgegriffen werden.

Wie insbesondere die Grundstellung des Ventilschiebers 29 zeigt, steht die Speiseluft in der geschlossenen Stellung also sowohl an dem Dichtelement 42 als auch an dem weiteren Dichtelementen an der Außenseite des Stellabschnitts 31 an. Dabei sind die Außenseiten des Dichtelementes 42 und des weiteren Dichtelementes 52 im Wesentlichen auf gleicher Höhe, so dass die Wirkflächen dieser Dichtelemente 47, 52 im Wesentlichen gleich groß sind. Der Ventilschieber ist folglich druckausgeglichen, so dass durch die anstehende Speiseluft keine Bewegung in die eine oder andere Richtung erfolgt.

Die Ventileinrichtung 11 ist also derart ausgestaltet, dass ein Schalten völlig unabhängig vom anstehenden Arbeitsdruck erfolgt. Dadurch können sehr kurze Schaltzeiten realisiert werden, insbesondere auch nach einem Stillstand, da das Schalten mittels Beaufschlagung der Steuerkammer 34 mit Steuerdruck erfolgen kann. Da keine Abhängigkeit des Schaltvorgangs vom Arbeitsdruck besteht, kann der Steuerraum bzw. die Steuerkammer 34 auch relativ klein dimensioniert werden, wodurch die Baugröße des Ventils 11 insgesamt relativ klein gehalten werden kann.

## Patentansprüche

1. Ventil für eine mit Hochdruck arbeitende Blasmaschine zur Erzeugung von geblasenen Hohlkörpern, mit einem Ventilgehäuse (12), das eine umfangsseitig von einer Gehäusewand (15) begrenzte Gehäuseausnehmung (16) aufweist, in der wenigstens ein Ventilglied mittels Druckluftbeaufschlagung verschieblich gelagert ist, wobei das Ventilgehäuse (12) wenigstens einen in die Gehäuseausnehmung (16) mündenden Speisekanal zur Zuführung von unter Arbeitsdruck stehender Speiseluft und wenigstens einen von der Gehäuseausnehmung (16) abgehenden Arbeitskanal besitz, an dem in Abhängigkeit von wenigstens zwei unterschiedlichen Funktionsstellungen des Ventilglieds unter Arbeitsdruck stehende Arbeitsluft für den Blasvorgang bereitstellbar ist, und wobei dem Ventilglied Stellmittel zugeordnet sind, die mit einer Stellkraft auf eine Stellseite des Ventilglieds einwirken und dieses in eine Grundstellung der Funktionsstellungen bewegen, aus der es durch Druckluftbeaufschlagung einer Steuerseite des Ventilglieds herausbewegbar ist, wobei das Ventilglied als länglicher Ventilschieber (29) ausgebildet ist, der einen eine Steuerfläche (33) besitzenden Steuerabschnitt (30) aufweist, der gemeinsam mit dem Ventilgehäuse (12) eine Steuerkammer (34) bildet, in die Steuerluft einleitbar ist, um den Ventilschieber (29) unabhängig von der unter Arbeitsdruck stehenden Speiseluft aus der Grundstellung herauszubewegen, und wobei eine gemeinsam von Ventilschieber (29) und Ventilgehäuse (12) gebildete, der Steuerkammer (34) entgegengesetzt angeordnete, eine Stellfläche (47) besitzende Stellkammer (51) vorgesehen ist, in der die Stellmittel aufgenommen sind, wobei die Stellkammer (51) ringförmig ausgebildet und in Richtung nach radial außen von der Gehäusewand (15) und in Richtung nach radial innen von einem zylindrischen Fortsatz (49) begrenzt ist, **dadurch gekennzeichnet, dass** als Stellmittel eine Luftfeder vorgesehen ist, und dass der Ventilschieber (29) wenigstens ein elastisches Dichtelement (42) trägt, das in Abhängigkeit von der Bewegung des Ventilschiebers (29) in oder außer Eingriff einer am Ventilgehäuse (12) angeordneten Dichtungshülse (43) bringbar ist, wobei weitere Dichtelemente (35, 52) zur Abdichtung der Steuerkammer (34) und der Stellkammer (51) vorgesehen sind, wobei eine Wirkfläche des elastischen Dichtelements (42) und Wirkflächen der weiteren Dichtelemente (35, 52) im Wesentlichen gleich groß sind.

2. Ventil nach Anspruch 1, **dadurch gekennzeichnet, dass** die Steuerfläche (33) des Steuerabschnitts (30) größer als die Stellfläche (47) des Stellabschnitts (31) ist.

3. Ventil nach Anspruch 1 oder 2, **dadurch gekennzeichnet, dass** der Fortsatz (49) an einem zum Ventilgehäuse (12) gehörenden Gehäusedeckel (27) angeordnet ist, der die Gehäuseausnehmung (16) an einer Endseite fluiddicht verschließt, wobei der Stellabschnitt (31) eine insbesondere zylindrische Ausnehmung aufweist, die den Fortsatz (49) übergreift.

4. Ventileinrichtung nach einem der vorhergehenden Ansprüche, **dadurch gekennzeichnet, dass** Steuerabschnitt (30) und Stellabschnitt (31) als separate Bauteile ausgestaltet sind, die über Verbindungsmittel miteinander gekoppelt sind.

5. Ventil nach einem der vorhergehenden Ansprüche, **dadurch gekennzeichnet, dass** das Ventilgehäuse (12) mehrteilig aufgebaut ist, mit einem die Steuerkammer (34) aufweisenden ersten Gehäuseteil (13) und einem die Stellkammer (51) aufweisenden zweiten Gehäuseteil (14).

6. Ventil nach Anspruch 5, **dadurch gekennzeichnet, dass** im ersten Gehäuseteil (13) ein zur Gehäuseausnehmung (16) gehörender Ringraum (21) ausgebildet ist, in den der wenigstens eine Speisekanal (23a, 23b), in axialer Richtung zu einer Gehäuse-Längsachse (19) ausgerichtet, einmündet.

7. Ventil nach einem der vorhergehenden Ansprüche, **dadurch gekennzeichnet, dass** Endlagendämpfmittel zur Endlagendämpfung des Ventilschiebers (29) bei dessen Einfahren in die Funktionsstellungen vorgesehen sind.

8. Ventil nach einem der vorhergehenden Ansprüche, **dadurch gekennzeichnet, dass** die Dichtungshülse (43) an ihrem Innenumfang eine Kontur (45) aufweist, die in Axialrichtung verlaufend derart ausgebildet ist, dass das Dichtelement (42) bei dessen in Eingriff Bewegung verpresst wird.

9. Ventil nach einem der vorhergehenden Ansprüche, **dadurch gekennzeichnet, dass** die Dichtungshülse (43) in axialer Richtung zur Gehäuse-Längsachse (19) eingesetzt in einer im ersten Gehäuseteil (13) ausgebildeten Hülsenaufnahme (44) aufgenommen ist.

10. Ventil nach einem der vorhergehenden Ansprüche, **dadurch gekennzeichnet, dass** die Dichtungshülse (43) mit Presssitz in der Hülsenaufnahme (44) sitzt.

11. Ventil nach einem der vorhergehenden Ansprüche, **dadurch gekennzeichnet, dass** die Dichtungshülse (43) aus Metall besteht.

## Claims

1. Valve for a high-pressure-operated blowing machine for the production of blown hollow bodies, comprising a valve housing (12) having a housing recess (16) the circumference of which is bounded by a housing wall (15) and in which at least one valve member is mounted while being capable of displacement by means of the application of compressed air, wherein the valve housing (12) has at least one feed passage terminating into the housing recess (16) for the supply of feed air under operating pressure and at least one working passage extending from the housing recess (16) and capable of providing operating air under operating pressure for the blowing process as a function of at least two different functional positions of the valve member, and wherein the valve member is assigned actuating means which act on an actuating side of the valve member with an actuating force and move it into a home position of the functional positions, from which it can be moved by the application of compressed air to a control side of the valve member, wherein the valve member is designed as an oblong valve slide (29) having a control section (30) with a control surface (33) which, together with the valve housing (12), forms a control chamber (34) into which control air can be introduced in order to move the valve slide (29) out of its home position independently of the feed air under operating pressure, and wherein an actuating chamber (51) formed jointly by the valve slide (29) and the valve housing (12), placed opposite the control chamber (34) and having an actuating surface (47) is provided, in which actuating chamber (51) the actuating means are accommodated, the actuating chamber (51) being annular and bounded by the housing wall (15) in a radially outward direction and by a cylindrical extension (49) in a radially inward direction, **characterised in that** an air spring is provided as actuating means, and **in that** the valve slide (29) supports at least one elastic sealing element (42) which, as a function of the movement of the valve slide (29), can be brought into engagement with or disengaged from a sealing sleeve (43) provided on the valve housing (12), wherein further sealing elements (35, 52) are provided for sealing the control chamber (34) and the actuating chamber (51), an active area of the elastic sealing element (42) and active areas of further sealing elements (35, 52) being substantially equal in size.

2. Valve according to claim 1, **characterised in that** the control surface (33) of the control section (30) is larger than the actuating surface (47) of the actuating section (31).

3. Valve according to claim 1 or 2, **characterised in that** the extension (49) is provided at a housing cover (27) belonging to the valve housing (12) and forming a fluid-tight seal for the housing recess (16) at an end face, the actuating section (31) having an in particular cylindrical recess which overlaps the extension (49).

4. Valve device according to any of the preceding claims, **characterised in that** the control section (30) and the actuating section (31) are designed as separate components which are coupled to one another by connecting means.

5. Valve according to any of the preceding claims, **characterised in that** the valve housing (12) is constructed in several parts, having a first housing part (13) provided with the control chamber (34) and a second housing part (14) provided with the actuating chamber (51).

6. Valve according to claim 5, **characterised in that** an annular chamber (21) belonging to the housing recess (16) is formed in the first housing part (13), into which annular chamber (21) the at least one feed passage (23a, 23b), oriented in the axial direction with respect to a longitudinal housing axis (19), terminates.

7. Valve according to any of the preceding claims, **characterised in that** end position damping means are provided for the end position damping of the valve slide (29) moving into the functional positions.

8. Valve according to any of the preceding claims, **characterised in that** the internal circumference of the sealing sleeve (41) has a contour (45) which is in the axial direction formed such that the sealing element (42) is pressed while being brought into engagement.

9. Valve according to any of the preceding claims, **characterised in that** the sealing sleeve (43), installed in the axial direction with respect to the longitudinal housing axis (19), is accommodated in a sleeve receptacle (44) formed in the first housing part (13).

10. Valve according to any of the preceding claims, **characterised in that** the sealing sleeve (43) is press-fitted into the sleeve receptacle (44).

11. Valve according to any of the preceding claims, **characterised in that** the sealing sleeve (43) is made of metal.

## Revendications

1. Valve pour une machine de soufflage travaillant à haute pression pour la génération de corps creux soufflés, avec un boîtier de valve (12) qui présente un évidement de boîtier (16) délimité côté périphérie par une paroi de boîtier (15), dans lequel au moins un organe de valve est logé de manière mobile par alimentation en air comprimé, le boîtier de valve (12) possédant au moins un canal d'alimentation débouchant dans l'évidement de boîtier (16) pour l'amenée d'air d'alimentation se trouvant sous pression de travail et au moins un canal de travail partant de l'évidement de boîtier (16), sur lequel en fonction d'au moins deux positions fonctionnelles différentes de l'organe de valve, de l'air de travail se trouvant sous pression de travail peut être mis à disposition pour le processus de soufflage, et des moyens de réglage étant associés à l'organe de valve, lesquels agissent avec une force de réglage sur un côté de réglage de l'organe de valve et le déplacent dans une position de base des positions fonctionnelles, de laquelle il peut être déplacé par alimentation en air comprimé d'un côté de commande de l'organe de valve, l'organe de valve étant réalisé comme un tiroir de valve (29) oblong qui présente une section de commande (30) possédant une surface de commande (33), qui forme conjointement avec le boîtier de valve (12) une chambre de commande (34), dans laquelle de l'air de commande peut être introduit afin de déplacer le tiroir de valve (29) indépendamment de l'air d'alimentation se trouvant sous pression de travail hors de la position de base, et une chambre de réglage (51) formée conjointement par le tiroir de valve (29) et le boîtier de valve (12), disposée à l'opposé de la chambre de commande (34), possédant une surface de réglage (47) étant prévue, dans laquelle les moyens de réglage sont reçus, la chambre de réglage (51) étant réalisée en forme d'anneau et étant délimitée dans le sens radial vers l'extérieur par la paroi de boîtier (15) et dans le sens radial vers l'intérieur par un prolongement (49) cylindrique, **caractérisée en ce qu'**un amortisseur pneumatique est prévu comme moyens de réglage et **en ce que** le tiroir de valve (29) porte au moins un élément étanche (42) élastique qui peut être amené en fonction du mouvement du tiroir de valve (29) en ou hors engagement avec une bague d'étanchéité (43) disposée sur le boîtier de valve (12), d'autres éléments étanches (35, 52) étant prévus pour rendre étanche la chambre de commande (34) et la chambre de réglage (51), une surface active de l'élément étanche élastique (42) et des surfaces actives des autres éléments étanches (35, 52) présentant une taille sensiblement identique.

2. Valve selon la revendication 1, **caractérisée en ce que** la surface de commande (33) de la section de commande (30) est supérieure à la surface de réglage (47) de la section de réglage (31).

3. Valve selon la revendication 1 ou 2, **caractérisée en ce que** le prolongement (49) est disposé sur un couvercle de boîtier (27) appartenant au boîtier de soupape (12), qui ferme de manière étanche au fluide l'évidement de boîtier (16) sur un côté d'extrémité, la section de réglage (31) présentant un évidement en particulier cylindrique qui recouvre le prolongement (49).

4. Dispositif à valve selon l'une quelconque des revendications précédentes, **caractérisé en ce que** la section de commande (30) et la section de réglage (31) sont configurées comme des composants séparés qui sont couplés l'un à l'autre par des moyens de liaison.

5. Valve selon l'une quelconque des revendications précédentes, **caractérisée en ce que** le boîtier de valve (12) est constitué de plusieurs parties, une première partie de boîtier (13) présentant la chambre de commande (34) et une seconde partie de boîtier (14) présentant la chambre de réglage (51).

6. Valve selon la revendication 5, **caractérisée en ce qu'**un espace annulaire (21) appartenant à l'évidement de boîtier (16) est réalisé dans la première partie de boîtier (13), dans lequel débouche l'au moins un canal d'alimentation (23a, 23b) orienté dans le sens axial par rapport à un axe longitudinal de boîtier (19).

7. Valve selon l'une quelconque des revendications précédentes, **caractérisée en ce que** des moyens d'amortissement en position finale sont prévus pour l'amortissement en position finale du tiroir de valve (29) lors de son arrivée dans les positions fonctionnelles.

8. Valve selon l'une quelconque des revendications précédentes, **caractérisée en ce que** la bague d'étanchéité (43) présente sur sa périphérie intérieure un contour (45) qui est réalisé s'étendant dans le sens axial de telle manière que l'élément étanche (42) soit pressé lors de son mouvement en engagement.

9. Valve selon l'une quelconque des revendications précédentes, **caractérisée en ce que** la bague d'étanchéité (43) est reçue insérée dans un logement de bague (44) réalisé dans la première partie de boîtier (13) dans le sens axial par rapport à l'axe longitudinal de boîtier (19).

10. Valve selon l'une quelconque des revendications précédentes, **caractérisée en ce que** la bague d'étanchéité (43) loge en ajustement serré dans le logement de bague (44).

11. Valve selon l'une quelconque des revendications précédentes, **caractérisée en ce que** la bague d'étanchéité (43) est en métal.
